(19) Europäisches Patentamt
European Patent Office
Office européen des brevets

(11) Veröffentlichungsnummer: **0 416 363 B1**

(12) **EUROPÄISCHE PATENTSCHRIFT**

(45) Veröffentlichungstag der Patentschrift: **15.11.95**

(51) Int. Cl.$^{6}$: **C08G 75/02**, C08K 5/42, C08L 81/02

(21) Anmeldenummer: **90115968.1**

(22) Anmeldetag: **21.08.90**

(54) **Modifizierung von Polyarylensulfiden.**

(30) Priorität: **02.09.89 DE 3929171**

(43) Veröffentlichungstag der Anmeldung:
**13.03.91 Patentblatt 91/11**

(45) Bekanntmachung des Hinweises auf die Patenterteilung:
**15.11.95 Patentblatt 95/46**

(84) Benannte Vertragsstaaten:
**BE DE FR GB IT**

(56) Entgegenhaltungen:
**EP-A- 0 193 951**
**EP-A- 0 339 392**
**EP-A- 0 345 550**
**CH-A- 480 402**
**DE-A- 3 615 030**

(73) Patentinhaber: **BAYER AG**

**D-51368 Leverkusen (DE)**

(72) Erfinder: **Köhler, Burkhard, Dr.**
**Mündelheimer Strasse 94**
**D-4150 Krefeld 11 (DE)**
Erfinder: **Heinz, Hans-Detlef, Dr.**
**Breslauer Strasse 31**
**D-4150 Krefeld (DE)**
Erfinder: **Reinking, Klaus, Dr.**
**Robert-Stolz-Strasse 16b**
**D-5632 Wermelskirchen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 416 363 B1

## Beschreibung

Die Erfindung betrifft ein Verfahren zur Modifizierung von Polyarylensulfiden, vorzugsweise Polyphenylensulfiden mit Hydroxy- und/oder Aminogruppen.

Polyarylensulfide mit funktionellen Gruppen sind bekannt (z.B. US-A 3 354 129, Intern. J. Polymeric Mater. 11 (87) 263). Weiterhin sind Phenylensulfid-Polymere bzw. -Oligomere mit funktionellen Endgruppen wie Carboxyl, Nitril etc. (Telechele) bekannt (z.B. Polymer Bulletin 4 (81) 459, FR-A 2 470 780, DE-A 3 421 608, DE-A 3 421 610).

Die beschriebenen, mit funktionellen Gruppen modifizierten Polyarylensulfide sind zum Teil schwer herstellbar, da ein Monomerbaustein mit funktioneller Gruppe bei der Synthese des Polymeren eingesetzt werden muß. Solche Comonomere können die Synthese erschweren, während der Reaktion unerwünschte Nebenreaktionen verursachen oder wegen nicht vollständigen Einbaus in die Polymerkette die Kreisläufe des Herstellungsprozesses verunreinigen.

Eine Modifizierung von Polyarylensulfiden mit OH- und/oder $NH_2$-Gruppen ist bei der Polymerisation schwierig, da halogenhaltige Phenole und/oder Aniline die Polymerisationsreaktion der Dihalogenbenzole mit der Schwefelquelle stören. Phenole werden als Regler bei der Polyarylensulfidsynthese eingesetzt, z.B. DE-A 3 601 215.

Es wurde nun gefunden, daß eine nachträgliche Modifizierung von Polyarylensulfiden zum Einbau von OH- und/oder NH-Gruppen möglich ist.

Gegenstand der Erfindung ist ein Verfahren zur Modifizierung von Polyarylensulfiden (PAS), vorzugsweise Polyphenylensulfiden (PPS), in einem Extruder wobei die Polyarylensulfide durch Umsetzung von

a) einem oder mehreren Diahalogenaromaten der Formeln (I), (II) und/oder (III)

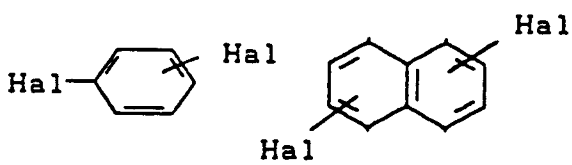

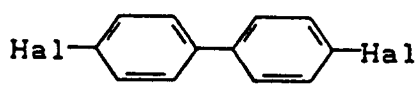

(I), (II), (III),

wobei Hal für Fluor, Chlor oder Brom, vorzugsweise für Chlor, steht,

b) 0 - 5 Mol %, bezogen auf die Summe der Dihalogenaromaten a) eines Tri- oder Tetrahalogenaromaten der Formel IV

$Ar^1\ Hal_n$ (IV),

wobei $Ar^1$ für einen aromatischen $C_6$-$C_{14}$-Rest und Hal für Fluor, Chlor oder Brom, vorzugsweise für Chlor, steht und

c) einem oder mehreren Schwefelspendern der Formel (V)

$M_2S$ (V)

wobei M für Alkali, vorzugsweise Natrium oder Kalium steht und das Verhältnis (a+b):c im Bereich von 0,75:1 bis 1,15:1 liegt;

d) in einem organischen Lösungsmittel, vorzugsweise in N-Methylpyrrolidon oder N-Methylcaprolactam, gegebenenfalls unter Mitverwendung eines Katalysators, vorzugsweise Caprolactam, Alkalicarboxylaten und/oder den Alkalisalzen der 6-Amino- oder 6-Methylaminocapronsäure, wobei das molare Verhältnis c:d im Bereich von 1:2 bis 1:15 liegt,

hergestellt worden sind

mit

0,1 bis 20 Gew.-%, vorzugsweise von 0,7 bis 5 Gew.-%, von OH- oder $NH_2$-Gruppen-haltigen Aromaten der Formel (VI)

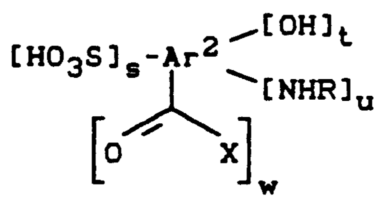

(VI),

wobei

R für Wasserstoff, einen $C_1$-$C_{22}$-Alkylrest, der durch OH- oder $NH_2$-Gruppen substituiert sein kann, einen $C_1$-$C_{22}$-Acylrest oder einen $C_6$-$C_{14}$-Arylrest, der durch OH- oder $NH_2$-Gruppen substituiert sein kann, steht,

$Ar^2$ für einen aromatischen $C_6$-$C_{22}$-Rest steht, der durch $C_1$-$C_{22}$-Alkylreste, Nitrogruppen, Nitrosogruppen oder Halogen (z.B. Cl, Br) substituiert sein kann,

s für 1, 2 oder 3 steht

t, u und w für 0, 1 oder 2 stehen, wobei die Summe (s + t + u + w) kleiner (<) 6 und die Summe (t + u) größer gleich (≧) 1 ist und

X für eine OR-Gruppe oder eine NHR-Gruppe, wobei R die bereits angegebene Bedeutung hat, steht.

Die Umsetzung wird ohne Solvens bei Temperaturen von oberhalb des Schmelzpunktes des Polyarylensulfids bis 450° C, gegebenenfalls unter Inertgas, vorzugsweise unter Scherung, durchgeführt.

Erfindungsgemäß einsetzbare Polyarylensulfide, vorzugsweise Polyphenylensulfide sind bekannt, z.B. EP-A 171 021, US-A 3 354 129 und handelsüblich z.B. Tedur®, Ryton®.

Die Umsetzung kann in Knetern oder (Schneckenwellen) Extrudern durchgeführt werden.

Beispiele für erfindungsgemäß einsetzbare Stoffe der Formel (VI) sind 2-, 3- und 4-Hydroxybenzolsulfonsäure, 2-Hydroxy-5-nitrobenzolsulfonsäure, 5-Chlor-2-hydroxy-3-nitrobenzolsulfonsäure, 3,5-Dichlor-4-hydroxybenzolsulfonsäure, 4-Hydroxy-3-nitrobenzolsulfonsäure, 1-Hydroxy-2-naphthalinsulfonsäure, 4-Hydroxy-2-naphthalinsulfonsäure, 4-Hydroxy-1-naphthalinsulfonsäure, 5-Hydroxy-1-naphthalinsulfonsäure, 5-Hydroxy-2-naphthalinsulfonsäure, 8-Hydroxy-2-naphthalinsulfonsäure, 8-Hydroxy-1-naphthalinsulfonsäure, 5-Hydroxy-1,6-naphthalindisulfonsäure, 4-Hydroxy-2,7-naphthalindisulfonsäure, 4-Chlor-5-hydroxy-2,7-naphthalindisulfonsäure, 4-Hydroxy-2,6-naphthalindisulfonsäure, 8-Hydroxy-1,6-naphthalindisulfonsäure, 4-Hydroxy-1,5-naphthalindisulfonsäure, 3-Hydroxy-1-naphthalinsulfonsäure, 3-Hydroxy-7-nitro-1-naphthalinsulfonsäure, 6-Hydroxy-1-naphthalinsulfonsäure, 6-Hydroxy-2-naphthalinsulfonsäure, 7-Hydroxy-2-naphthalinsulfonsäure, 4-Hydroxy-1,3,5-naphthalintrisulfonsäure, 7-Hydroxy-1-naphthalinsulfonsäure, 2-Hydroxy-6-nitro-1,4-naphthalindisulfonsäure, 3-Hydroxy-2,7-naphthalindisulfonsäure, 3-Hydroxy-2,6-naphthalindisulfonsäure, 3-Hydroxy-1,5-naphthalindisulfonsäure, 6-Hydroxy-1,3-naphthalindisulfonsäure, 7-Hydroxy-1,3-naphthalindisulfonsäure, 7-Hydroxy-1,3,6-naphthalintrisulfonsäure, 6-Hydroxy-1,3,8-pyrentrisulfonsäure, 4,8-Dihydroxy-2,6-naphthalindisulfonsäure, 4,7-Dihydroxy-2-naphthalinsulfonsaure, 4,6-Dihydroxy-2-naphthalinsulfonsäure, 4,5-Dihydroxy-2,7-naphthalindisulfonsäure, 6,7-Dihydroxy-2-naphthalinsulfonsäure, 3,6-Dihydroxy-2-naphthalinsulfonsäure, 3,6-Dihydroxy-2,7-naphthalindisulfonsäure, 6,8-Dihydroxy-1,3-pyrendisulfonsäure, 6-Hydroxy-5-nitroso-2-naphthalinsulfonsäure, 2-Hydroxy-5-sulfobenzoesäure, 4-Hydroxy-2-sulfobenzoesäure, 1-Hydroxy-4,7-disulfo-2-naphthalincarbonsäure, 3-Hydroxy-7-sulfo-2-naphthalincarbonsäure, 3,5-Dihydroxy-7-sulfo-2-naphthalincarbonsäure, 2-Aminobenzolsulfonsäure, 2-Amino-5-chlorbenzolsulfonsäure, 2-Amino-3,5-dichlorbenzolsulfonsäure, 2-Amino-5-nitrobenzolsulfonsäure, 2-Amino-3,5-dinitrobenzolsulfonsäure,3-Aminobenzolsulfonsäure, 3-Amino-4-chlorbenzolsulfonsäure, 5-Amino-2-chlorbenzolsulfonsäure, 2-Amino-2,4,5-trichlorbenzolsulfonsäure, 5-Amino-2-nitrobenzolsulfonsäure, 4-Aminobenzolsulfonsäure, 4-(Phenylamino)benzolsulfonsäure, 4-(Benzylamino)benzolsulfonsäure, N-(2-Amino-4-nitrophenyl)-sulfanilsäure, 4-Amino-2-nitrobenzolsulfonsäure, 4-Amino-3-nitrobenzolsulfonsäure, 4-Amino-3,5-dinitrobenzolsulfonsäure,2,4-Diaminobenzolsulfonsäure, 2,5-Diaminobenzolsulfonsäure, 5-Amino-2-(phenylamino)benzolsulfonsäure, N,N'-Bis-(4-amino-2-sulfophenyl)-p-phenylendiamin, 5-Amino-2- (4-aminophenyl)-aminobenzolsulfonsäure, 3-Amino-4-(phenylamino)benzolsulfosäure, 5-Amino-2-methylbenzolsulfonsäure, 2-Amino-5-chlor-3-methyl-benzolsulfonsäure, 2,4-Diamino-5-methylbenzolsulfonsäure 3-Amino-4-methylbenzolsulfonsäure, 2-Amino-3,5-dimethylbenzolsulfonsäure, 2-Amino-1-naphthalinsulfonsäure, 4-Amino-1-naphthalinsulfonsäure, 5-Amino-1-naphthalinsulfonsäure, 5-Amino-8-nitro-1-naphthalinsulfonsäure, 6-Amino-1-naphathalinsulfonsäure, 7-Amino-1-naphthalinsulfonsäure, 7-Amino-5-nitro-1-naphthalinsulfonsäure, 8-Amino-1-naphthalinsulfonsäure, 1-Amino-2-naphthalinsulfonsäure, 5-Amino-2-naphthalinsulfonsäure, 6-Amino-2-naphthalinsulfonsäure, 7-(Methylamino)-2-naphthalinsulfonsäure, Benzidin-3-sulfonsäure, Anilin-3,5-disulfonsäure,

4,6-Diamino-1,3-benzoldisulfonsäure, 3-Amino-1,5-naphthalindisulfonsäure, 3-Amino-7-nitro-1,5-naphthalindisulfonsäure, 4,5-Diamino-2,7-naphthalindisulfonsäure, Benzidin-2,2′-disulfonsäure, 5-Amino-2-hydroxybenzolsulfonsäure, 5-Amino-2-hydroxy-3-nitro-benzolsulfonsäure, 3Amino-4-hydroxybenzolsulfonsäure, 7-Amino-4-hydroxy-2-naphthalinsulfonsäure, 4-Amino-5-hydroxy-1,7-naphthalindisulfonsäure, 8-Amino-1-naphthol-3,6-disulfonsäure, 4-Amino-5-hydroxy-1,3-naphthalindisulfonsäure, 5-Sulfoanthranilsäure, 5-Sulfo-N-methylanthranilsäure, 5-Amino-2-hydroxy-3-sulfobenzoesäure und die N-Acetylverbindungen der aufgeführten Aminoverbindungen.

Die erfindungsgemäß hergestellten Reaktionsprodukte eigenen sich z.B. als Legierungspartner für andere Thermoplaste. Sie können in Abmischung mit üblichen Füllstoffen und/oder anderen Polymeren oder für sich alleine bei der Herstellung geformter Körper verwendet werden.

## Beispiele

### Beispiel 1

Man extrudiert auf einem Doppelwellenextruder ZSK 32 von Werner und Pfleiderer bei 320° C eine Mischung aus 98 % eines Polyparaphenylensulfids (PPS) der Schmelzviskosität 40 Pa.s (306° C, 1000 l/s) und 2 % 4-Hydroxy-1-naphthalinsulfonsäure.

### Beispiel 2

Man extrudiert eine Mischung aus 98 % PPS und 2 % 3-Amino-4-hydroxybenzolsulfonsäure analog Beispiel 1.

### Beispiel 3

Man extrudiert eine Mischung aus 98 % PPS und 2 % 4-Aminobenzolsulfonsäure (Sulfanilsäure) analog Beispiel 1.

Aus den erfindungsgemäßen Reaktionsprodukten können mit Wasser oder Dioxan höchstens 5 Gew.-% der eingesetzten Sulfonsäuremenge wieder extrahiert werden.

## Patentansprüche

**1.** Verfahren zur Modifizierung von Polyarylensulfiden in einem Extruder bzw. kneter, wobei die Polyarylensulfide durch Umsetzung von

a) einem oder mehreren Dihalogenaromaten der Formeln (I), (II) und/oder (III)

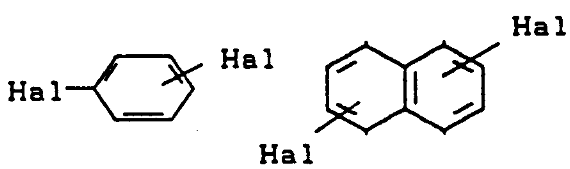

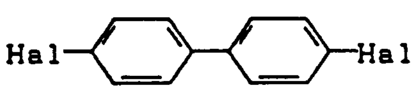

(I), (II), (III),

wobei Hal für Fluor, Chlor oder Brom steht,

b) 0 - 5 Mol %, bezogen auf die Summe der Dihalogenaromaten a) eines Tri- oder Tetrahalogenaromaten der Formel (IV)

$Ar^1\ Hal_n$ (IV),

wobei $Ar^1$ für einen aromatischen $C_6$-$C_{14}$-Rest und Hal für Fluor, Chlor oder Brom steht und

c) einem oder mehreren Schwefelspendern der Formel (V)

$M_2S$ (V),

wobei M für Natrium oder Kalium steht und das Verhältnis (a+b):c im Bereich von 0,75:1 bis 1,15:1

liegt,

d) in einem organischen Lösungsmittel, gegebenenfalls unter Mitverwendung eines Katalysators, und/oder den Alkalisalzen der 6-Amino- oder 6-Methylaminocapronsäure, wobei das molare Verhältnis c:d im Bereich von 1:2 bis 1:15 liegt,

hergestellt worden sind,

mit 0,1 bis 20 Gew.-%, von OH- oder $NH_2$-Gruppenhaltigen Aromaten der Formel (VI)

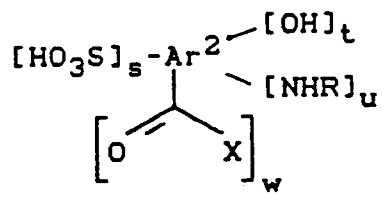

(VI),

wobei

| | |
|---|---|
| R | für Wasserstoff, einen $C_1$-$C_{22}$-Alkylrest, der durch OH- oder $NH_2$-Gruppen substituiert sein kann, einen $C_1$-$C_{22}$-Acylrest oder einen $C_6$-$C_{14}$-Arylrest, der durch OH- oder $NH_2$-Gruppen substituiert sein kann, steht, |
| $Ar^2$ | für einen aromatischen $C_6$-$C_{22}$-Rest steht, der durch $C_1$-$C_{22}$-Alkylreste, Nitrogruppen, Nitrosegruppen oder Halogen (z.B. Cl, Br) substituiert sein kann, |
| s | für 1, 2 oder 3 steht |
| t, u und w | für 0, 1 oder 2 stehen, wobei die Summe (s + t + u + w) kleiner (<) 6 und die Summe (t + u) größer gleich (≧) 1 ist und |
| X | für eine OR-Gruppe oder eine NHR-Gruppe, wobei R die bereits angegebene Bedeutung hat, steht. |

**Claims**

**1.** Method for the modification of polyarylene sulphides in an extruder or kneader, the polyarylene sulphides having been prepared by reaction

a) of one or more dihaloaromatic compounds of the formulae (I), (II) and/or (III)

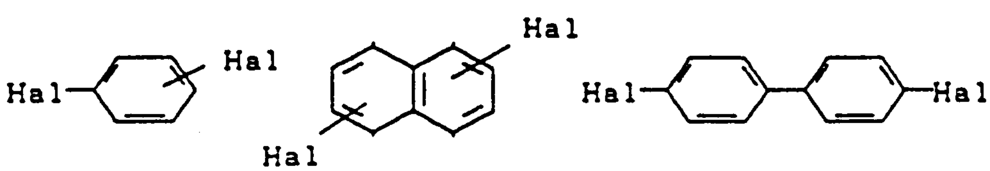

(I), (II), (III),

wherein Hal represents fluorine, chlorine or bromine,

b) of from 0 - 5 mol %, referred to the sum of the dihaloaromatic compounds a), of a tri- or tetrahaloaromatic compound of the formula (IV)

$Ar^1 Hal_n$ (IV),

wherein $Ar^1$ represents an aromatic $C_6$ - $C_{14}$ radical and Hal represents fluorine, chlorine or bromine and

c) of one or more sulphur donors of the formula (V)

$M_2S$ (V),

wherein M represents sodium or potassium and the ratio (a+b):c is in the range of from 0.75:1 to 1.15:1,

d) in an organic solvent, optionally with the concomitant use of a catalyst, and/or the alkali metal salts of 6-aminocaproic acid or 6-methylaminocaproic acid, wherein the molar ratio c:d is in the range of from 1:2 to 1:15,

by means of from 0.1 to 20 wt.% of aromatic compounds containing OH groups or $NH_2$ groups and of the formula (VI)

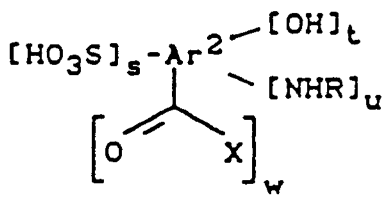

(VI),

wherein

| | |
|---|---|
| R | represents hydrogen, a $C_1$ - $C_{22}$ alkyl radical which can be substituted by OH groups or $NH_2$ groups, a $C_1$ - $C_{22}$ acyl radical or a $C_6$ - $C_{14}$ aryl radical which can be substituted by OH groups or $NH_2$ groups, |
| $Ar^2$ | stands for an aromatic $C_6$ - $C_{22}$ radical which can be substituted by $C_1$ - $C_{22}$ alkyl radicals, nitro groups, nitroso groups or halogen (for example, Cl, Br), |
| s | represents 1, 2 or 3, |
| t, u and w | represent 0, 1 or 2, wherein the sum of (s + t + u + w) is less than (<) 6 and the sum of (t + u) is greater than or equal to (≧) 1, and |
| X | represents an OR group or an NHR group, wherein R has the meaning given above. |

**Revendications**

**1.** Procédé de modification des poly(sulfures d'arylène) dans une extrudeuse ou une pétrisseuse, les poly(sulfures d'arylène) ayant été préparés par réaction :

a) d'un ou de plusieurs composé(s) aromatique(s) dihalogénés de formules (I), (II) et/ou (III)

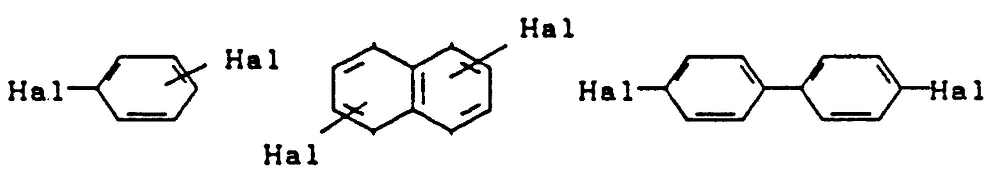

(I) (II) (III)

dans lesquelles Hal désigne le fluor, le chlore ou le brome,

b) de 0 - 5 % en mole, par rapport à la somme des composés aromatiques dihalogénés a) d'un composé aromatique trihalogéné ou tétrahalogéné de formule (IV)

$Ar^1\ Hal_n$ (IV),

dans laquelle $Ar^1$ désigne un résidu aromatique $C_6$-$C_{14}$ et Hal désigne le fluor, le chlore ou le brome, et

c) d'un ou de plusieurs donneurs de soufre de formule (V)

$M_2S$ (V)

dans laquelle M désigne le sodium ou le potassium et le rapport (a + b):c étant compris entre 0,75:1 et 1,15:1,

d) dans un solvant organique, éventuellement en utilisant simultanément un catalyseur et/ou des sels alcalins de l'acide 6-amino- ou 6-méthylaminocaproïque, le rapport molaire c:d étant compris entre

1:2 et 1:15,
avec de 0,1 à 20 % en poids de composé aromatique comportant des groupes OH ou $NH_2$ de formule (VI)

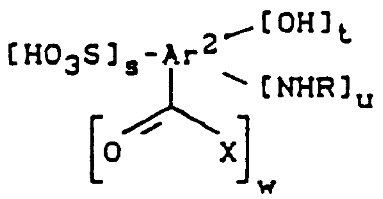

(VI)

dans laquelle

R désigne l'hydrogène, un radical alkyle $C_1$-$C_{22}$, pouvant être substitué par des groupes OH ou $NH_2$, un radical acyle $C_1$-$C_{22}$ ou un radical aryle $C_6$-$C_{14}$, pouvant être substitué par des groupes OH ou $NH_2$,

$Ar^2$ désigne un résidu aromatique $C_6$-$C_{22}$, pouvant être substitué par des radicaux alkyle $C_1$-$C_{22}$, des groupes nitro, des groupes nitroso ou un halogène (par exemple le chlore ou le brome),

s désigne 1, 2 ou 3,

t, u et w désignent 0, 1 ou 2,
la somme (s + t + u + w) étant inférieure (<) à 6 et la somme (t + u) étant supérieure ou égale (≧) à 1 et

X désigne un groupe OR ou NHR, R ayant la signification déjà mentionnée précédemment.